# EUROPEAN PATENT APPLICATION

(11) **EP 2 367 144 A1**
(43) Date of publication of application: **21.09.2011**
(21) Application number: 10156559.6
(22) Date of filing: 15.03.2010
(51) Int. Cl.: G06Q 10/00

(54) **Method and apparatus for tracking changes to a set of data**

(71) Applicant: RESEARCH IN MOTION LIMITED, Waterloo, Ontario N2L 3W8 (CA)
(72) Inventor: Bells, Matthew, Waterloo Ontario N2L 5Z5 (CA)
(74) Representative: MERH-IP Matias Erny Reichl Hoffmann

(57) **Abstract**

A method and apparatus for tracking changes to a set of data stored in association with a first time period in a memory device are provided. Change data indicative that the set of data is to be associated with a second time period is received. The set of data is associated with the second time period, while the association with the first time period is maintained, such that a first visual representation of the set of data can be provided in the first time period and a second visual representation of the set of data can be provided in the second time period. A link between the first visual representation and the second visual representation is provided, the link enabled to indicate that the set of data has been moved to the second time period, thereby preventing receipt of further data to determine the first time period.

## Description

### FIELD

The specification relates generally to data management and specifically to a method and apparatus for tracking changes to a set of data.

### BACKGROUND

Computing devices are increasingly used to track changes to data, however, the technologies used to track changes to data are currently limited.

### SUMMARY

A first aspect of the specification provides a method for tracking changes to a set of data stored in association with a first time period in a memory device, the method implementable in a computing device comprising a processing unit. The method comprises receiving change data indicative that the set of data is to be associated with a second time period. The method further comprises associating, via the processing unit, the set of data with the second time period, while maintaining the association with the first time period, such that a first visual representation of the set of data is be provided in the first time period and a second visual representation of the set of data is be provided in the second time period. The method further comprises providing a link between the first visual representation and the second visual representation, the link enabled to indicate that the set of data has been moved to the second time period, thereby preventing receipt of further data to determine the first time period.

The method can further comprise controlling, via the processing unit, circuitry of a display device to provide the first visual representation and the second visual representation.

The method can further comprise controlling the circuitry to provide the first visual representation according to a first mode and controlling the circuitry to provide the second visual representation according to a second mode, such that the first visual representation and the second visual representation are visually distinguishable from one another. One of the first mode and the second mode can be indicative of one the first time period and the second time period being an accepted time period. One of the first visual representation and the second visual representation can be represented as solid, while an other of the first visual representation and the second visual representation can be represented as ghosted. The other of the first visual representation and the second visual representation which is ghosted can link to the one of the first visual representation and the second visual representation which is solid.

At least one of the first mode and the second mode can comprise at least one visual differentiator such that the first visual representation and the second visual representation appear differently, the at least one visual differentiator comprising at least one of a different font, a different colour, a different transparency, a different line width, a different line types, and one or more icons.

The link can comprise an arrow pointing from the first visual representation to the second visual representation.

When one of the first visual representation and the second visual representation do not fit within a view on the display device, the link can points off-screen, and the method can further comprise receiving input data indicative that at least one of the link and a one of the first visual representation and the second visual representation which is on-screen has been selected, the processing unit responsively controlling the display device alter the view to provide an other of the first visual representation and the second visual representation which was off-screen.

The method can further comprise receiving input data indicative that the second time period is accepted. The method can further comprise deleting the association with the first time period from the memory device and deleting the first visual representation.

A second aspect of the specification provides a computing device for tracking changes to a set of data stored in association with a first time period in a memory device. The computing device comprises a processing unit enabled to: receive change data indicative that the set of data is to be associated with a second time period; associate the set of data with the second time period, while maintaining the association with the first time period, such that a first visual representation of the set of data is be provided in the first time period and a second visual representation of the set of data is be provided in the second time period; and provide a link between the first visual representation and the second visual representation, the link enabled to indicate that the set of data has been moved to the second time period, thereby preventing receipt of further data to determine the first time period.

The processing unit further can be further enabled to control circuitry of a display device to provide the first visual representation and the second visual representation. The processing unit further can be further enabled to control the circuitry to provide the first visual representation according to a first mode and control the circuitry to provide the second visual representation according to a second mode, such that the first visual representation and the second visual representation are visually distinguishable from one another. One of the first mode and the second mode can be indicative of one the first time period and the second time period being an accepted time period. One of the first visual representation and the second visual representation can be represented as solid, while an other of the first visual representation and the second visual representation can be represented as ghosted. The other of the first visual representation and the second visual representation which is ghosted can links to the one of the first visual representation and the second visual representation which is solid. At least one of the first mode and the second mode can comprise at least one visual differentiator such that the first visual representation and the second visual representation appear differently, the at least one visual differentiator comprising at least one of a different font, a different colour, a different transparency, a different line width, a different line types, and one or more icons.

The link can comprise an arrow pointing from the first visual representation to the second visual representation.

When one of the first visual representation and the second visual representation do not fit within a view on the display device, the link points off-screen, and the processing unit further is further enabled to receive input data indicative that at least one of the link and a one of the first visual representation and the second visual representation which is on-screen has been selected, and in response control the display device to alter the view to provide an other of the first visual representation and the second visual representation which was off-screen.

The processing unit further can be further enabled to receive input data from an input device, the input data indicative that the second time period is accepted. The processing unit further can be further enabled to delete the association with the first time period from the memory device and delete the first visual representation.

A third aspect of the specification provides a computer program product, comprising a computer usable medium having a computer readable program code adapted to be executed to implement a method for tracking changes to a set of data stored in association with a first time period in a memory device. The method is implementable in a computing device comprising a processing unit. The method comprises receiving change data indicative that the set of data is to be associated with a second time period. The method further comprises associating, via the processing unit, the set of data with the second time period, while maintaining the association with the first time period, such that a first visual representation of the set of data is be provided in the first time period and a second visual representation of the set of data is be provided in the second time period. The method further comprises providing a link between the first visual representation and the second visual representation, the link enabled to indicate that the set of data has been moved to the second time period, thereby preventing receipt of further data to determine the first time period.

### BRIEF DESCRIPTIONS OF THE DRAWINGS

Implementations are described with reference to the following figures, in which:

Fig. 1 depicts a block diagram of a computing device for tracking changes to a set of data, according to non-limiting implementations;

Fig. 2 depicts block diagram of details of the computing device of Fig. 1, according to non-limiting implementations;

Fig. 3 depicts a flow chart of a method for tracking changes to a set of data, according to non-limiting implementations

Fig. 4 depicts a block diagram of a computing device for tracking changes to a set of data, according to non-limiting implementations;

Fig. 5 depicts a representation of a set of data associated with a first time period, according to non-limiting implementations;

Figs. 6 to 8 depict representations of a set of data associated with a first time period and a second time period, according to non-limiting implementations; and

Fig. 9 depicts a representation of a set of data associated with an accepted time period with a link indicating a previous time period, according to non-limiting implementations.

### DETAILED DESCRIPTION OF THE IMPLEMENTATIONS

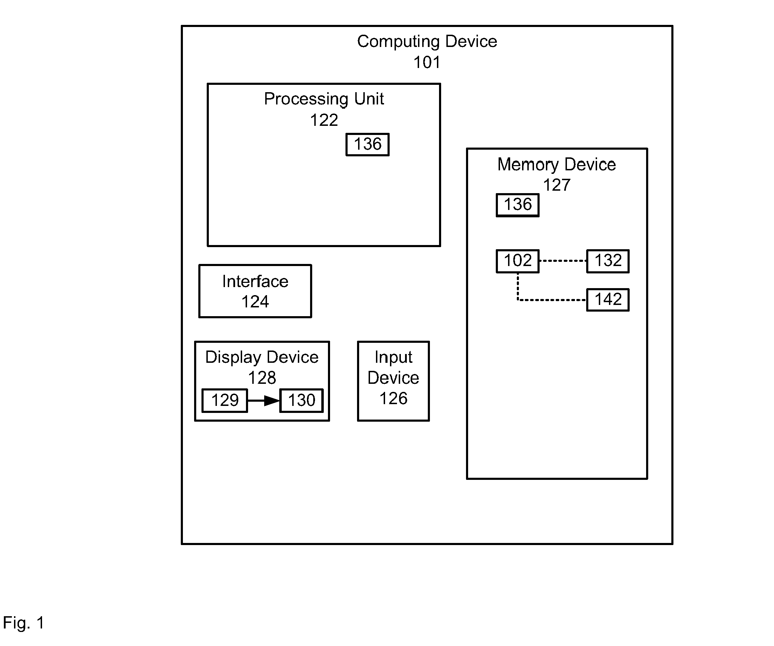

Fig. 1 depicts a computing device 101 for tracking changes to data 102, according to non-limiting implementations. Computing device 101 comprises a processing unit 122 interconnected with a communication interface 124 and a memory device 127, for example via a computing bus (not depicted). Computing device 101 is further associated with an input device 126 and a display device 128 in communication with computing device 101, such that input data can be received at processing unit 122 from input device 126, and display device 128 can be controlled by processing unit 122. As depicted, input device 126 and display device 128 are internal to computing device 101, however in other implementations, input device 126 and display device 128 can be external to computing device 101. Furthermore, while only one set of data 102 is shown in Fig. 1, it is appreciated that the number of sets of data 102 is not particularly limiting and can be more than one. While In depicted implementations, data 102 is stored in memory device 127, it is appreciated that in other implementations data 102 can be stored remote from computing device 101 and accessed by computing device 101 via any suitable wired or wireless link: for example, data 102 could be stored in a database and/or server (not depicted) remote from computing device 101. Furthermore, computing device 101 is enabled to track changes to data, as will be described below.

In particular data 102 is associated with data 132 representative of a first time period, referred to hereinafter as first time period 132. For example, data 102 can be representative of a calendaring event scheduled to occur during first time period 102. Alternatively, data 102 can be representative of a synchronization event scheduled to occur during the first time period. It is appreciated, however, that these are merely example and are not to be considered unduly limiting. Indeed, data 102 can be any suitable data associated with a time period.

Furthermore, it is appreciated that data 102 can comprise first time period 132 and/or first time period 132 can be stored separately (as depicted) from data 102.

It is further appreciated that first time period 132 can comprise a start time. First time period 132 can further comprise at least one of an end time and/or a duration (e.g. 1 hour), the end time being determinable from the start time and the duration.

Computing device 101 can further comprises application 136 which, as described above, is appreciated to be a database management application. Application 136 can be stored in memory device 127 and processed by processing unit 122. In particular processing of application 136 enables computing device 101 to track changes to data 102, for example when data 102 is to be associated with a second time period 142 rather than first time period 132 (second time period similar to first time period 142, but with different a start time, end time, and/or duration, as desired). Application 136 is described in further detail below.

In particular second time period 102 can be representative of a time period to which data 102 is being moved, such as when a calendar event is moved from first time period 132 to second time period 142, and/or a synchronization event is moved from first time period 132 to second time period 142. Such a move represents a change to data 102 that is tracked via application 136.

In general, computing device 101 comprises any suitable computing device for processing application 136, including but not limited to any suitable combination of personal computers, laptop computing devices, portable computing device, mobile electronic devices, PDAs (personal digital assistants), cellphones, smartphones and the like. Other suitable computing devices are within the scope of present implementations.

Processing unit 122 comprises any suitable processor, or combination of processors, including but not limited to a microprocessor, a central processing unit (CPU) and the like. Other suitable processing units are within the scope of present implementations.

Communication interface 124 comprises any suitable communication interface, or combination of communication interfaces. In particular communication interface 124 is enabled to communicate with remote computing device via a network (not depicted) to receive messages, the network being wired and/or wireless as desired. Accordingly, communication interface 124 is enabled to communicate according to any suitable protocol which is compatible with the network, including but not limited to wired protocols, USB (universal serial bus) protocols, serial cable protocols, wireless protocols, cell-phone protocols, wireless data protocols, Bluetooth protocols, NFC (near field communication) protocols and/or a combination, or the like. In some implementations, communication interface 124 can be enabled to communicate with remote computing devices (e.g. servers, other computing devices, other mobile electronic devices, etc.), via any suitable communication network according to any suitable protocol, including but not limited to packet based protocols, Internet protocols, analog protocols, PSTN (public switched telephone network) protocols, WiFi protocols, WiMax protocols and the like, and/or a combination. Other suitable communication interfaces and/or protocols are within the scope of present implementations.

Input device 126 is generally enabled to receive input data, and can comprise any suitable combination of input devices, including but not limited to a keyboard, a keypad, a pointing device, a mouse, a track wheel, a trackball, a touchpad, a touch screen and the like. Other suitable input devices are within the scope of present implementations.

Memory device 127 can comprise any suitable memory device, including but not limited to any suitable one of or combination of volatile memory, non-volatile memory, random access memory (RAM), read-only memory (ROM), hard drive, optical drive, flash memory, magnetic computer storage devices (e.g. hard disks, floppy disks, and magnetic tape), optical discs, and the like. Other suitable memory devices are within the scope of present implementations. In particular, memory device 127 is enabled to store application 136, data 102, first time period 132 and second time period 142. In some implementations, memory device 127 can data 102 store data 102, first time period 132 and second time period 142 in a database (not depicted).

Display device 128 comprises circuitry 129 for generating representations of data, for example a representation 130 of application 136, as will be described below. Display device 128 can include any suitable one of or combination of CRT (cathode ray tube) and/or flat panel displays (e.g. LCD (liquid crystal display), plasma, OLED (organic light emitting diode), capacitive or resistive touchscreens, and the like). Circuitry 129 can include any suitable combination of circuitry for controlling the CRT and/or flat panel displays etc., including but not limited to display buffers, transistors, electron beam controllers, LCD cells, plasmas cells, phosphors etc. In particular, display device 128 and circuitry 129 can be controlled by processing unit 122 to generate representation 130.

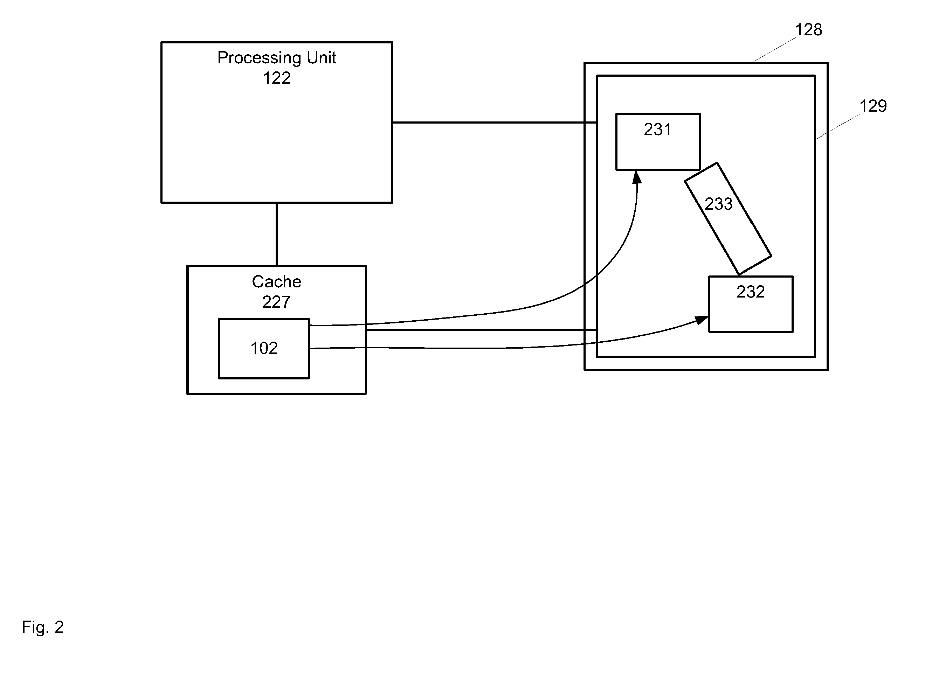

In particular, attention is directed to Fig. 2 which depicts non-limiting implementations of display device 128 and circuitry 129, in communication with processing unit 122 and a memory cache 127 (hereinafter cache 227). In some implementations, memory device 127 can comprise cache 227, while in other implementations cache 227 can comprise a separate memory device. Furthermore, processing unit 122 is in communication with cache 122 and further enabled to control circuitry 129. In particular, processing unit is enabled to control a first area 231 of circuitry 129 according to a first mode and control a second area 232 of circuitry 129 according to a second mode, such that the electrical behaviour of circuitry 129 in each of areas 231, 232 is different; hence, when display device 128 is viewed, the visual appearance of each of areas 231, 232 are different, even when being controlled to provide a representation of a similar data set in each of area 231, 232. For example, data 102 can be retrieved and transmitted to cache 227 by processing unit 122, and each of areas 231, 232 can be controlled to provide a representation of data 102 to appear differently in each of areas 231, 232.

Circuitry 129 can further comprise a third area 233 which can be controlled by processing unit 122 to provide a visual representation of a link between first area 231 and second area 232, to indicate a relationship there between.

In implementations depicted in Fig. 2, it is understood that circuitry 129 and areas 231, 232 comprises, for example, transistors in flat panel display, however in other implementations, circuitry 129 can comprise a combination of an electron gun in a CRT, and areas 231, 232 can comprise phosphors in a CRT.

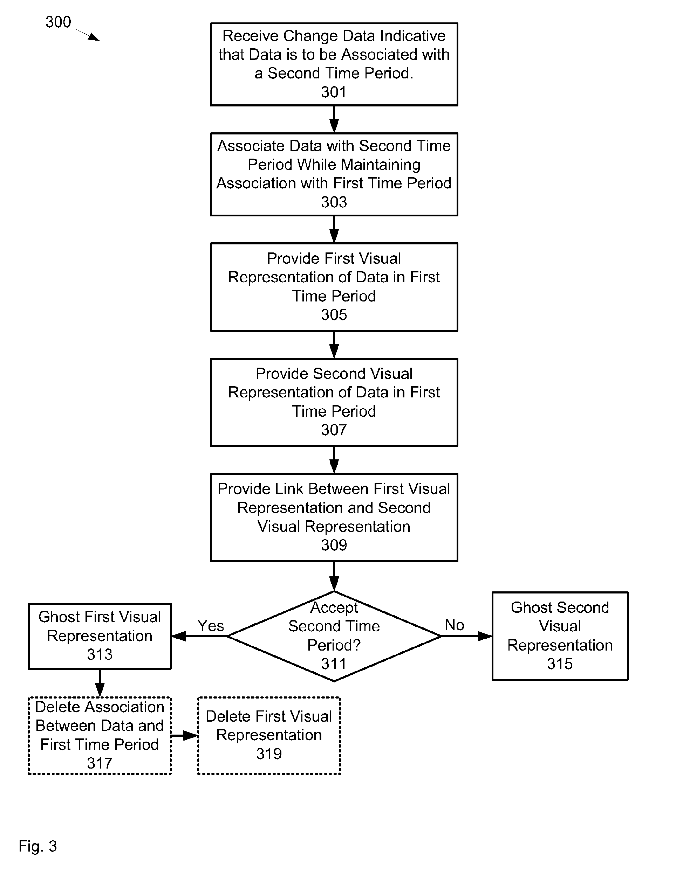

Attention is now directed to Fig. 3 which depicts a method 300 for tracking changes to a set of data stored in association with a first time period. In order to assist in the explanation of method 300, it will be assumed that method 300 is performed using computing device 101. Furthermore, the following discussion of method 300 will lead to a further understanding of computing device 101 and its various components. However, it is to be appreciated that computing device 101 and/or method 300 can be varied, and need not work exactly as discussed herein in conjunction with each other, and that such variations are within the scope of present implementations.

In exemplary implementations, method 300 is implemented at processing unit 122 in computing device 101. Furthermore, method 300 is implemented within application 136, hence it is appreciated that processing unit 122 is processing application 136.

In method 300 it is further appreciated that data 102 is initially associated with first time period 132, and stored in memory device 127.

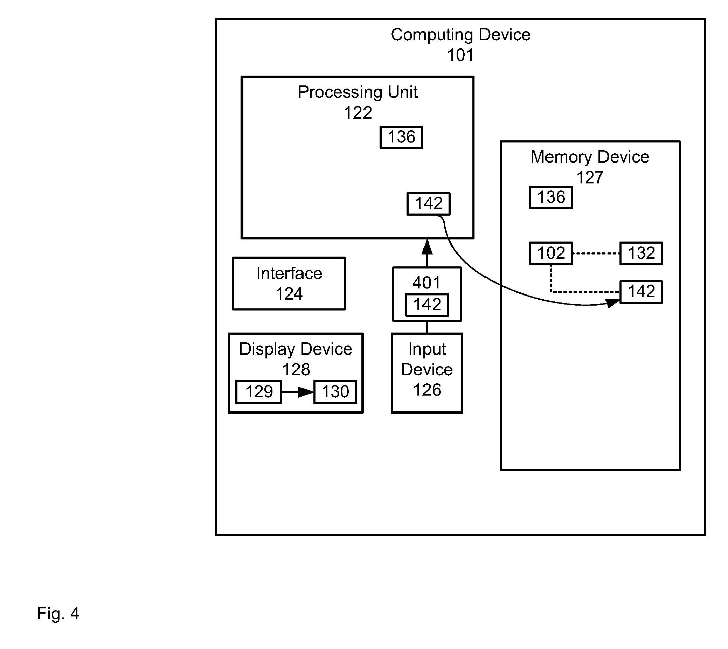

At step 301, change data 401 is received at processing unit 122, change data 401 indicative that data 102 is to be associated with second time period 142. For example, as depicted in Fig. 4 (substantially similar to Fig. 1 with like elements having like numbers), change data 401 can be received via input device 126. In alternative implementations, change data 401 can be received via interface 124, for example in an e-mail message, a calendar event change message or the like. Furthermore, data 401 can comprise second time period 142. In implementations where data 102 comprises a calendar event initially occurring during first time period 132, change data 401 comprises an indication that the calendar event is to be moved to a new time period, for example second time period 142.

Returning to Fig. 3, at step 303 data 102 is associated with second time period 142 while maintaining the association with first time period 132. For example, second time period 142 is extracted from change data 401 by processing unit 122 and stored in memory device 127 in association with data 102.

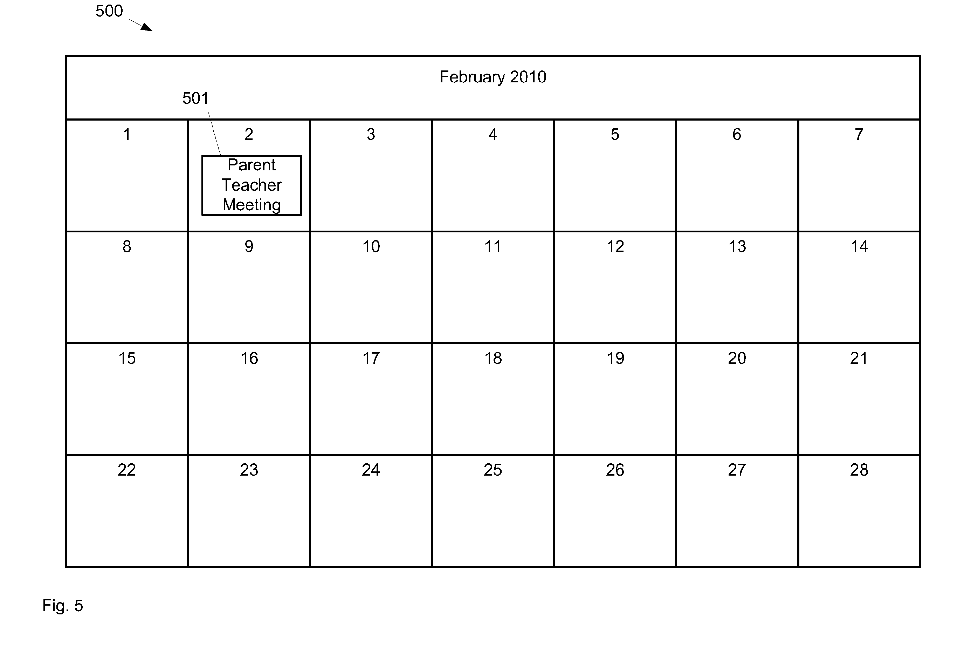

At step 305, a first visual representation 501 of data 102 can be provided in first time period 132. Similarly at step 307, a second visual representation 502 of data 102 can be provided in second time period 142 (visual representations 501, 502 depicted in Fig. 5 described below). Steps 305 and 307 can occur in any suitable order and/or in parallel with each other. Furthermore, in some implementations, step 305 can occur prior to step 301 and/or step 303 so that the first visual representation is provided before change data 401 is received and/or is processed.

At step 309, a link 503 (see Fig. 5 described below) is provided between first visual representation 501 and second visual representation 502, link 503 enabled to indicate that data 102 has been moved to second time period 142, thereby preventing data 102 from being changed based on further data containing a reference to first time period 132, as well as preventing receipt of further data to determine first time period 132.

For example, as depicted in Fig. 5, a representation 500 of application 136 can be provided by processing unit 122 controlling circuitry 129 in display device 128 to provide representation 500. In some implementations, representation 130 can comprise representation 500. In any event, implementations depicted in Fig. 5 return to the example of data 102 comprising a calendar event that initially occurs in first time period 132, for a "Parent Teacher Meeting" scheduled for February 2, 2010. Hence, as depicted, representation 500 comprises a calendar view of February 2010, and visual representation 501 comprises text "Parent Teacher Meeting" positioned in February 2, 2010 within the calendar view. In Fig. 5, it is appreciated that step 305 has been implemented. While present implementations are described with reference to a monthly calendar view, it is appreciated that the calendar view can be a day calendar view, a weekly calendar view, a monthly calendar view, a yearly calendar view, or the like, as desired.

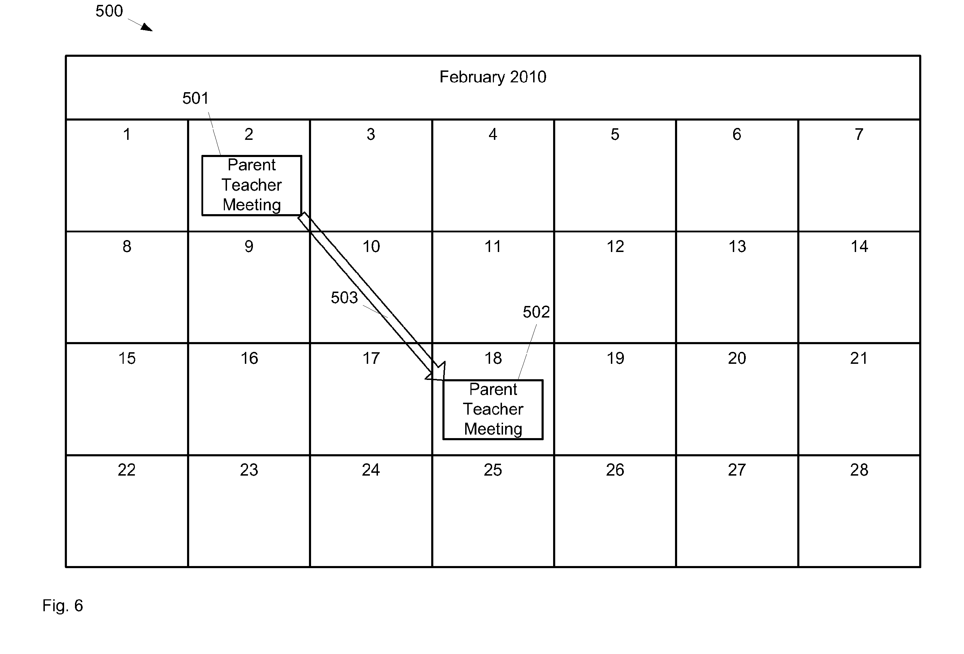

Attention is now directed to Fig. 6, which is similar to Fig. 5 with like elements having like numbers, however in Fig. 6 is appreciated that steps 307 and 309 have been implemented. Furthermore, it is appreciated that the calendar event "Parent Teacher Meeting" is to be moved to February 18, 2010, hence visual representation 502 comprises text "Parent Teacher Meeting" positioned in February 8, 2010 within the calendar view. However, as a reminder of when the calendar event was originally scheduled, visual representation 501 is not deleted, and furthermore link 503 is provided, in these implementations an arrow pointing from visual representation 501 to visual representation 502, to indicate that the calendar event is being moved from first time period 132 to second time period 142.

Hence, with reference to Figs. 2 and 6, area 231 of circuitry 129 corresponds to visual representation 501, area 232 of circuitry 129 corresponds to visual representation 502, and area 233 of circuitry 129 corresponds to link 503. Hence, area 231 is controlled to provide visual representation 501, area 232 is controlled to provide visual representation 502, and area 233 is controlled to provide link 503.

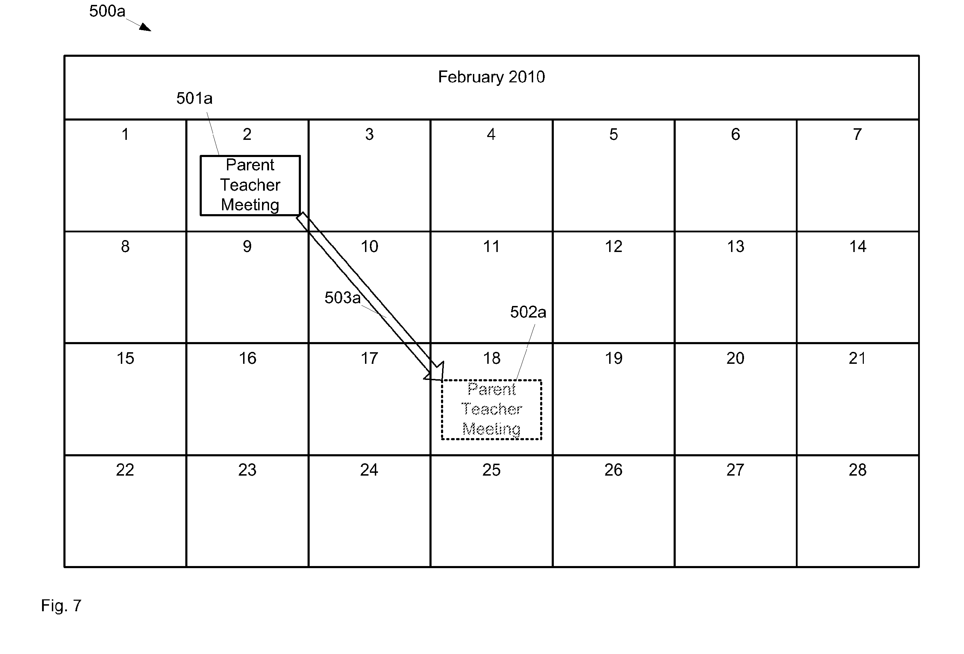

Attention is now directed to Fig. 7, similar to Fig 6 with like elements having like numbers, however with an "a" appended thereto. However, in these implementations, area 231 of circuitry 129, area 231 corresponding to visual representation 501a, is controlled according to a first mode; and area 232 of circuitry 129, area 232 corresponding to visual representation 502a, is controlled according to a second mode such that first visual representation 501a and second visual representation 502a are visually distinguishable from one another. For example, in depicted implementations, first visual representation 501a is provided as solid, and second visual representation 502a is provided as "ghosted", indicating that first time period 132 is currently the accepted time period, and second time period 142 is currently a proposed time period (i.e. a time period not yet accepted). However, the first mode and the second mode can be any suitable mode, including but not limited to modes comprising different fonts, different colours, different transparencies, different line widths, different line types, one or more icons (e.g. a splat and/or and asterisk and/or the like) or the like.

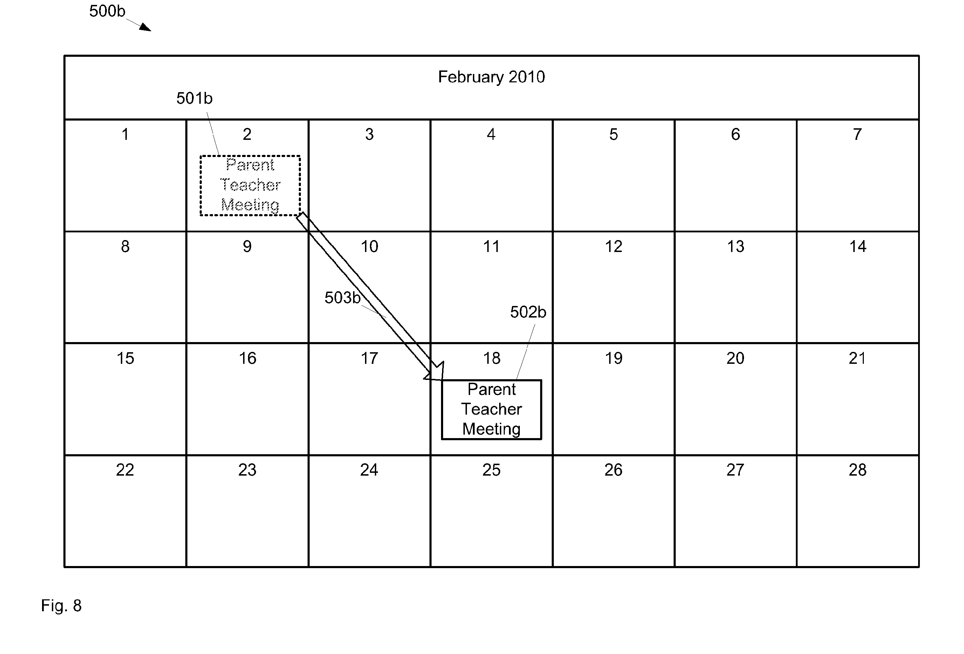

In particular, as previously mentioned, one of the first mode and the second mode is indicative of one of the first time period 132 and second time period 142 being an accepted time period. For example, change data 401 can be received, but second time period 142 may initially not be accepted: when data 102 comprises calendar event data and change data 401 comprises a proposed change to the calendar event, then before the proposed change is accepted, area 231 can be controlled to be solid while area 232 can be controlled to be ghosted, or the like (or indeed according to any suitable pair of different modes), as depicted in Fig. 7. However once second time period 142 is accepted as the new time period, the modes for each of area 231 and 232 can change, as depicted in Fig. 8, substantially similar to Fig. 7 with like elements having like numbers, however with a "b" appended thereto rather than an "a": in Fig. 8, first visual representation 501b is provided as "ghosted", and second visual representation 502a is provided as "solid", the opposite of Fig. 7.

Returning to Fig. 3 at an optional step 311, a determination can be made as to whether or not second time period 142 is accepted. Prior to step 311, it is appreciated that first time period 132 comprised an accepted time period. To determine whether second time period 142 is accepted or not, input data indicative that second time period 142 is accepted or not can be received via input device 126. Alternatively, acceptance data can be received via interface 124 in an e-mail, text message or the like.

When the second time period is accepted than first visual representation 501a/501b is ghosted (or the like) at step 313. Otherwise second visual representation 502a/502b is ghosted (or the like) at step 315 if it is not already ghosted. In either implementation, each of steps 313 and 315 include controlling areas 231, 232 of circuitry 129 according to different modes to provide a visual difference there between.

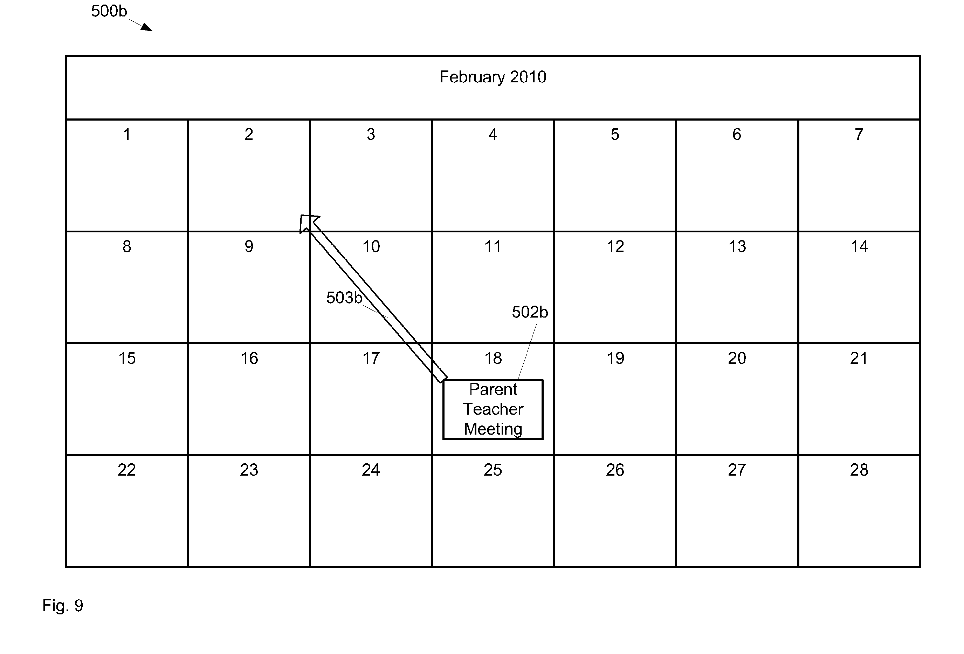

In some implementations, when second time period 142 is accepted at step 311, the association between data 102 and first time period 132 can be deleted from memory device 127 at step 317, and first visual representation 501a/501b can be deleted, such that the calendar view appears as Fig 9, substantially similar to Fig. 8, with like elements having like numbers. In some implementations, link 503b remains, however link 503b now points to the deleted time period. In other implementations link 503b can be deleted. In yet further implementations, first visual representation 501a/501b can remain as ghosted, as in Fig. 8, with link 503b pointing thereto as in Fig. 9: hence first visual representation 501a/501b remain as discreet icons visually linked to second visual representation 502a/502b.

Consider now implementations where computing device 101 is associated with an executive in a company, the executive having an assistant: in these implementations, the assistant can be involved with proposing/accepting new time periods for calendar events, for example via a second computing device (not depicted) with remote access to computing device 101. In some of these implementations, when a calendar event corresponding to first visual representation 501a/501b has been moved prior to the executive viewing first visual representation 501a/501b, then only second visual representation 502a/502b is provided, and neither first visual representation 501a/501b and/or link 503a/503b is provided. In other words, the proposed time period is accepted via the remote computer without involvement of the executive and there is no need to display a ghosted version of the original time period of the calendar event or a link there between. Indeed, in these implementations, second visual representation 502a/502b can be provided at a display device at the remote computer and not at display device 128. However, when the calendar event is viewed by the executive at display device 128, then the ghosted version (i.e. first visual representation 501a/501b and link 503a/503b) can be provided. In some implementations, first visual representation 501a/501b and link 503a/503b are provided for calendar events that have recently moved (i.e. within a given time period).

In yet further implementations, ghosted visual representations can be deleted after a given time period and/or when the ghosted visual representations are selected via input device 126. Furthermore, in some implementations, when ghosted visual representations are selected via input device 126, a virtual pointer of input device 126 is taken to the new visual representation (i.e. when first visual representation 101a/101b is selected via the virtual pointer, the visual pointer jumps to second visual representation 102a/102b). Deletion of the ghosted visual representation (e.g. first visual representation 101a/101b) can also occur when the new visual representation (e.g. second visual representation 102a/102b) is selected.

In yet further implementations, when first visual representation 501a/501b and second visual representation 502a/502b do not fit within the same view at display device 128, then link 503a/503b can point off screen to the visual representation that is not presently displayed; furthermore, receiving input data indicative that link 503a/503b has been selected can trigger the view to change to provide the visual representation that was not initially displayed. In some implementations, an indicator (e.g. an icon, an animation or the like) can be provided in association with link 503a/503b corresponding to a number of pages and/or a length time separating first visual representation 501a/501b and second visual representation 502a/502b (i.e. the number of pages and/or length of time that would have to be scrolled to get to the other visual representation). This feature can apply to any suitable view including but not limited to day views, weekly views, monthly views, yearly views or the like.

It is appreciated that the behaviour of first visual representation 101a/101b and second visual representation 102a/102b when selected and/or remotely access, can be configured in configuration data stored in memory device 127, configuration data based on preferences received via input device 126 or the like.

Consider now the prior art when a change data is received. Before the change data is accepted, there is no convenient method to determine what the effect of the change might be aside from opening and examining the change data, and then opening and examining a calendar view. Each of these actions requires input data to be received from an input device, placing wear and tear on the input device, as well as causing unnecessary processing of change data and data for generating the calendar view. Unnecessary wear and tear is also placed in circuitry in a display device as the change data and calendar views are repeatedly displayed to determine the changes and their impact. Furthermore, after the change data is accepted, a calendar view will now solely show the data in the new time period without any indication of the previous time period. For example, the change will freed up time during the previous time period, and this free time may not be obvious. Hence, again, the calendar view (and/or the change data) must be generated repeatedly to determine the impact of the change, again leading to wear and tear on the input device and the display circuitry. When this occurs at a mobile electronic device it is particularly problematic as the mobile electronic device generally has reduced computing resources a limited display screen size, and a limited input device hence it is more difficult to determine the impact of the changes by repeatedly generating the calendar view before and/or after accepting the changes. Furthermore, even more stress can be placed on the input device as the calendar view is scrolled through: as the mobile electronic device is generally self contained, a malfunction of the input device due to overstress can lead to the entire mobile electronic device being placed out of commission while it is repaired. Furthermore, due to the restricted display screen size, new methods to efficiently provide data at the display device are desirable beyond what is provided on a desktop computer to save computing resources and consequently provides a less frustrating experience for a user of a mobile electronic device.

It is hence appreciated that by providing method 300, the technical problems associated with the prior art are obviated and that the by advantageously associating data 102 with both first time period 132 and second time period 142, and by providing visual representations thereof connected by a link, changes can easily be tracked and their impact determined. This leads to a reduction in use of computer resources over the prior art as well as a reduction in wear and tear on the input device. Furthermore, in a mobile electronic device, such an approach can lengthen the life of the mobile electronic device as the chance of a failure of an input device is reduced.

Those skilled in the art will appreciate that in some implementations, the functionality of computing device 101 can be implemented using pre-programmed hardware or firmware elements (e.g., application specific integrated circuits (ASICs), electrically erasable programmable read-only memories (EEPROMs), etc.), or other related components. In other implementations, the functionality of computing device 101can be achieved using a computing apparatus that has access to a code memory (not shown) which stores computer-readable program code for operation of the computing apparatus. The computer-readable program code could be stored on a computer readable storage medium which is fixed, tangible and readable directly by these components, (e.g., removable diskette, CD-ROM, ROM, fixed disk, USB drive). Alternatively, the computer-readable program code could be stored remotely but transmittable to these components via a modem or other interface device connected to a network (including, without limitation, the Internet) over a transmission medium. The transmission medium can be either a non-wireless medium (e.g., optical and/or digital and/or analog communications lines) or a wireless medium (e.g., microwave, infrared, free-space optical or other transmission schemes) or a combination thereof.

A portion of the disclosure of this patent document contains material which is subject to copyright protection. The copyright owner has no objection to the facsimile reproduction by any one the patent document or patent disclosure, as it appears in the Patent and Trademark Office patent file or records, but otherwise reserves all copyrights whatsoever.

Persons skilled in the art will appreciate that there are yet more alternative implementations and modifications possible for implementing the implementations, and that the above implementations and examples are only illustrations of one or more implementations. The scope, therefore, is only to be limited by the claims appended hereto.

## Claims

1. A method for tracking changes to a set of data stored in association with a first time period in a memory device (127), the method implementable in a computing device (101) comprising a processing unit (122), the method comprising:
receiving change data indicative that said set of data is to be associated with a second time period;
associating, via said processing unit (122), said set of data with said second time period, while maintaining said association with said first time period, such that a first visual representation of said set of data is be provided in said first time period and a second visual representation of said set of data is be provided in said second time period; and
providing a link between said first visual representation and said second visual representation, said link enabled to indicate that said set of data has been moved to said second time period, thereby preventing said set of data from being changed based on further data containing a reference to said first time period.

2. The method of claim 1, further comprising controlling, via said processing unit (122), circuitry (129) of a display device (128) to provide said first visual representation and said second visual representation.

3. The method of claim 2, further comprising controlling said circuitry (129) to provide said first visual representation according to a first mode and controlling said circuitry (129) to provide said second visual representation according to a second mode, such that said first visual representation and said second visual representation are visually distinguishable from one another.

4. The method of claim 3, wherein one of said first mode and said second mode is indicative of one said first time period and said second time period being an accepted time period.

5. The method of claim 4, wherein one of said first visual representation and said second visual representation is represented as solid, while an other of said first visual representation and said second visual representation is represented as ghosted.

6. The method of claim 5, wherein said other of said first visual representation and said second visual representation which is ghosted links to said one of said first visual representation and said second visual representation which is solid.

7. The method of claim 3, wherein at least one of said first mode and said second mode comprises at least one visual differentiator such that said first visual representation and said second visual representation appear differently, said at least one visual differentiator comprising at least one of a different font, a different colour, a different transparency, a different line width, a different line types, and one or more icons.

8. The method of any of claims 2 to 7, wherein said link comprises an arrow pointing from said first visual representation to said second visual representation.

9. The method of any of claims 2 to 7, wherein, when one of said first visual representation and said second visual representation do not fit within a view on said display device (128), said link points off-screen, said method further comprising receiving input data indicative that at least one of said link and a one of said first visual representation and said second visual representation which is on-screen has been selected, said processing unit (122) responsively controlling said display device (128) alter said view to provide an other of said first visual representation and said second visual representation which was off-screen.

10. The method of any of claims 1 to 9, further comprising receiving input data indicative that said second time period is accepted.

11. The method of claim 10, further comprising deleting said association with said first time period from said memory device (127) and deleting said first visual representation.

12. A computing device (101) for tracking changes to a set of data stored in association with a first time period in a memory device (127), the computing device (101) comprising:
a processing unit (122) enabled to implement any of the steps of the method of claims 1 to 11.

13. A computer program product, comprising a computer usable medium having a computer readable program code adapted to be executed to implement any of the steps of the method of claims 1 to 11.

## Amended claims

### Amended claims in accordance with Rule 137(2) EPC.

**1.** A method for tracking changes to a set of data stored in association with a first time period in a memory device (127), the method implementable in a computing device (101) comprising a processing unit (122), the method comprising:
receiving change data indicative that said set of data is to be associated with a second time period;
associating, via said processing unit (122), said set of data with said second time period, while maintaining said association with said first time period, such that a first visual representation of said set of data is be provided in said first time period and a second visual representation of said set of data is be provided in said second time period;
providing a link between said first visual representation and said second visual representation, said link enabled to indicate that said set of data has been moved to said second time period; and
controlling, via said processing unit (122), circuitry (129) of a display device (128) to provide said first visual representation and said second visual representation in one of a weekly calendar view and a monthly calendar view,
wherein said link comprises an arrow pointing from said first visual representation to said second visual representation

**2.** The method of claim 2, further comprising controlling said circuitry (129) to provide said first visual representation according to a first mode and controlling said circuitry (129) to provide said second visual representation according to a second mode, such that said first visual representation and said second visual representation are visually distinguishable from one another.

**3.** The method of claim 2, wherein one of said first mode and said second mode is indicative of one said first time period and said second time period being an accepted time period.

**4.** The method of claim 3, wherein one of said first visual representation and said second visual representation is represented as solid, while an other of said first visual representation and said second visual representation is represented as ghosted.

**5.** The method of claim 4, wherein said other of said first visual representation and said second visual representation which is ghosted links to said one of said first visual representation and said second visual representationwhich is solid.

**6.** The method of claim 2, wherein at least one of said first mode and said second mode comprises at least one visual differentiator such that said first visual representation and said second visual representation appear differently, said at least one visual differentiator comprising at least one of a different font, a different colour, a different transparency, a different line width, a different line types, and one or more icons.

**7.** The method of any of claims 1 to 6, wherein, when one of said first visual representation and said second visual representation do not fit within a view on said display device (128), said link points off-screen, said method further comprising receiving input data indicative that at least one of said link and a one of said first visual representation and said second visual representation which is on-screen has been selected, said processing unit (122) responsively controlling said display device (128) alter said view to provide an other of said first visual representation and said second visual representation which was off-screen.

**8.** The method of any of claims 1 to 7, further comprising receiving input data indicative that said second time period is accepted.

**9.** The method of claim 8, further comprising deleting said association with said first time period from said memory device (127) and deleting said first visual representation.

**10.** A computing device (101) for tracking changes to a set of data stored in association with a first time period in a memory device (127), the computing device (101) comprising:
a processing unit (122) enabled to implement any of the steps of the method of claims 1 to 9.

**11.** A computer program product, comprising a computer usable medium having a computer readable program code adapted to be executed to implement any of the steps of the method of claims 1 to 9.
